# EUROPÄISCHE PATENTANMELDUNG

(11) **EP 1 843 154 A1**
(43) Veröffentlichungstag der Anmeldung: **10.10.2007**
(21) Anmeldenummer: 06007395.4
(22) Anmeldetag: 07.04.2006
(51) Int. Cl.: G01N 30/60, B01J 20/282, B01J 20/30, B01J 20/28

(54) **Herstellung von monolithischen Trennsäulen**

(71) Anmelder: Merck Patent GmbH, 64293 Darmstadt (DE)
(72) Erfinder: Lubda, Dieter, Dr., 64625 Bensheim (DE); Cabrera, Karin, Dr., 63303 Dreieich (DE); Kreher, Klaus, 64839 Münster (DE); Mcllwrick, Charles, Roderick, Dr., 64658 Fürth/Odenwald (DE)

(57) **Zusammenfassung**

Die vorliegende Erfindung betrifft die Herstellung von monolithischen Trennsäulen mit kleinem Durchmesser und verbesserter Trennleistung sowie deren Verwendung.

## Beschreibung

Die vorliegende Erfindung betrifft ein Verfahren zur Verringerung des Durchmesser von monolithischen Trennsäulen, sowie auf diese Weise hergestellte Trennsäulen mit verbesserter Trennleistung und deren Verwendung.

### Stand der Technik

Durch die Entwincklung von miniaturisierten Synthesevorrichtungen, in denen mit kleinsten Eduktmengen chemische Reaktionen durchgeführt werden können, sind auch die Anforderungen an die entsprechenden Analyseeinrichtungen gestiegen, um die Auftrennung geringster Stoffmengen zu ermöglichen.

Ein wesentlicher Vorteil von Trennsäulen mit kleinerem Durchmesser ist die Möglichkeit deutlich geringere Substanzmengen detektieren zu können. Eine Trennsäule mit 3 mm Durchmesser. hat eine um den Faktor 2.35 höhere Detektionsempfindlichkeit gegenüber einer konventionellen Säule mit einem Durchmesser von 4.6 mm (berechnet nach F= (4.6/3)²)

Es werden daher in der chromatographischen Trenntechnik immer häufiger Trennsäulen mit verringertem Durchmesser als die Standardprodukte (4,6 mm Innendurchmesser) eingesetzt. Aber auch in Verbindung mit üblicherweise eingesetzten Vorrichtungen weist die Verwendung von Säulen mit verringertem Durchmesser Vorteile auf, da sie geringere Mengen an Lösungsmittel erforderlich machen. Dieses ermöglicht auch deren Einsatz in Verbindung mit massenselektiver Detektion (LC/MS) ohne einen Teil der mobilen Phase vor dem Eingang in den MS-Detektor heraussplitten zu müssen.

Monolithische Trennsäulen können infolge ihrer großen Permeabilität bei gleichzeitig hoher Trennleistung für chromatographische Trennungen mit erhöhten Flussraten eingesetzt werden. Hierin besteht der eigentliche Vorteil bei der Verwendung von monolithischen Trennsäulen gegenüber anderen Trennsäulen, Bei Verwendung von kleineren Durchmessern können zusätzlich noch höhere Detektionsempfindlichkeiten erzielt werden.

Zur Herstellung von anorganischen porösen Materialien in Form von monolithischen Trennsäulen, insbesondere von entsprechenden Säulen basierend auf Silicagelen, sind verschiedene Verfahren bekannt. Wie auch in EP 0 710219 B1 beschrieben, wird bevorzugt nach dem Sol-Gel-Verfahren gearbeitet. Als Sol-Gel-Methode werden weitverbreitete Verfahren bezeichnet, bei denen man zunächst polymerisierbare niedermolekulare Spezies erzeugt und schließlich über Polymerisationsreaktionen aggregierte oder polymerisierte Materialien erhält, Die Sol-Gel-Methode eignet sich u. a. zur Anwendung bei der Hydrolyse von Metallalkoholaten, Metallchloriden, Metallsalzen oder Kombinationsverbindungen, die in der Regel Carboxyl- oder beta-Diketon-Liganden enthalten. Ein entsprechendes Verfahren wird in EP 0 363 697 beschrieben, worin die Lösung eines Metallalkoholats gemeinsam mit einem organischen Polymer als Porenbildner einem Hydrolyseprozess aussetzt wird. Die folgende Polykondensation führt schließlich zu einer Phasentrennung mit einer silikatreichen Phase und einer wässrigen organischen Phase mit dem gelösten Polymer. Die nach diesem Verfahren hergestellten Materialien zeichnen sich durch verbundene offene Poren mit enger Porengrößenverteilung aus.

Um mit dem Sol-Gel-Verfahren eine monolithische Trennsäule herzustellen, wird ein Sol in eine Form, z. B. ein Rohr, aus einem geeigneten Material mit einem Innendurchmesser von beispielsweise 6 mm, gegeben. Hierdurch wird der spätere Durchmesser des entstehenden Monolithen festgelegt, der sich durch Schrumpfung ergibt. Erfahrungsgemäß beträgt die Schrumpfung etwa 15 % des ursprünglichen Durchmessers.

Des weiteren konnte mit REM-Aufnahmen gezeigt werden, dass die äußere Kieselgelschicht der monolithischen Säule sehr inhomogen aufgebaut ist. Durch den Kontakt des Sols mit der Innenoberfläche des Gelierrohres kommt es zu einer anderen Kieselgelstruktur als im Inneren der Säule. Es bilden sich Domänen an der äußeren Oberfläche mit einer extrem dichten Kieselgelschicht, die nicht die klassische Porenstruktur zeigt wie im Inneren des Monolithen.

Es hat sich nun gezeigt, dass dieses bekannte Verfahren bei der Herstellung von Monolithen mit geringerem Durchmesser als etwa 4,6 mm und nach Schrumpfung auf 3 mm oder weniger zu Produkten führt, die keine ausreichenden chromatographischen Trennleistungen aufweisen. Die Ursache hierfür scheint im zunehmenden Einfluss des Randbereichs des Monolithen mit Domänen aus verdichtetem Kieselgel zu liegen, der sich bei Verringerung des Durchmessers verstärkt negativ auf das Trennergebnis auswirkt.

Wie Untersuchungen gezeigt haben, weisen die Randbereiche eine andere Struktur auf als weiter innen liegende Volumenelemente des gebildeten Monolithen. Während sich im Inneren ein dreidimensionales Netzwerk aufbaut, zeigen sich im Randbereich verdichtete Domänen von Kieselgel mit deutlich verminderter Porosität, was einen Einfluss auf die Trennleistung und Peaksymmetrie hat.

Neben den anorganischen monolithischen Chromatographiesäulen haben sich in den letzten Jahren immer mehr organische monolithische Säulen etabliert, da sie unter bestimmten Bedingungen bessere Eigenschaften aufweisen als die üblicherweise eingesetzten anorganischen Trennsäulen. Bei den organischen monolithischen Säulen handelt es sich bevorzugt um stark quervernetzte, harte organische Polymergele. Die Herstellung dieser monolithischen Säulen erfolgt an sich durch Herstellung eines organischen, polymeren Abdrucks eines anorganischen porösen Formkörpers, der nach der Polymerisation der organischen Monomere herausgelöst wird. Entsprechende Verfahren sind in den Patentanmeldungen EP 0 366 252 A und DE 199 46 674 A1 beschrieben. Da diese organischen Monolithen eine Negativform des ursprünglich eingesetzten anorganischen Formkörpers darstellen, weisen die Randbereiche der hergestellten organischen Monolithe ebenfalls einen anderen Aufbau auf, so dass sich diese ebenso negativ auf das Trennergebnis auswirken wie oben für die organischen Monolithe beschrieben.

### Aufgabenstellung

Aufgabe der vorliegenden Erfindung ist es daher, Trennsäulen zur Verfügung zu stellen, die es ermöglichen, geringe Mengen an Produktgemisch mit größter Empfindlichkeit chromatographisch aufzutrennen. Es ist aber auch Aufgabe der vorliegenden Erfindung, Trennsäulen mit geringerem Durchmesser zur Verfügung zu stellen, durch die es möglich ist, Trennungen mit größerer Empfindlichkeit durchzuführen, so dass auch geringste Verunreinigungen besser oder überhaupt detektiert werden können.

Darüber hinaus ist es wünschenswert, verbesserte Trennsäulen mit einem Durchmesser von weniger als 4,6 mm herzustellen, die es ermöglichen, die chromatographische Trennung mit der Massenspektrometrie als Detektionstechnik zu koppeln und in einer einzigen Anlage durchzuführen, weil diese beiden Methoden sich sehr gut ergänzen. Da Massenspektrometriegeräte im allgemeinen mit nur geringen Flussraten betrieben werden können, ist es wünschenswert, durch die vorliegende Erfindung Trennsäulen mit geringem Durchmesser zur Verfügung zu stellen, die sich mit diesen Geräten kombinieren lassen und trotz verringertem Durchmesser zu einer verbesserte Auftrennung führen.

Die Aufgabe der vorliegenden Erfindung ist es daher, ein preiswertes, in einfacher Weise durchführbares Verfahren zur Herstellung von monolithischen Chromatographiesäulen mit Durchmessern von weniger als 4,6 mm zur Verfügung zu stellen, wodurch monolithische Chromatographiesäulen erhalten werden, die über den Säulenquerschnitt verteilt homogene Eigenschaften aufweisen, so dass in jedem Volumenelement der hergestellten Säulen die gleiche Trennleistung erzielt wird.

Die Aufgabe wird durch ein Verfahren gelöst, indem in einem ersten Schritt entweder anorganische monolithische Chromatographiesäulen mit einem herkömmlichen Durchmesser von mehr als 4,6 mm nach dem Sol-Gel-Verfahren hergestellt werden, oder indem im Imprintverfahren geeignete organische Monomere in Matrizenformkörpern polymerisiert werden und der Matrizenformkörper durch Auswaschen entfernt wird und anschließend im nächsten Schritt der Durchmesser der erhaltenen Chromatographiesäulen durch einen speziellen Schleifschritt auf das gewünschte Maß reduziert wird.

### Lösung der erfindungsgemäßen Aufgabe

Überraschend wurde gefunden, dass es möglich ist, aus nach den üblichen Verfahren hergestellten organischen oder anorganischen monolithischen Trennsäulen mit einem Durchmesser von 4,6 mm und mehr entsprechende Säulen mit verringerten Durchmessern, beispielsweise von 3 oder 2 mm oder weniger, herzustellen, indem das äußere Material in einem geeigneten Abschleifverfahren abgeschliffen wird. Dieses kann sowohl ein spitzen loses Abschleifverfahren als auch ein anderes Verfahren sein, worin unter auf das empfindliche Material angepassten Bedingungen stufenweise dünne äußere Schichten von der jeweiligen monolithischen Säule abgetragen werden können.

Die Lösung der vorliegenden Aufgabe erfolgt daher durch mehrmaliges, stufenweises Abschleifen von ca. 0.1mm Schichten bis auf den gewünschten Durchmesser.

### Gegenstand der Erfindung

Gegenstand der Erfindung ist die Herstellung von monolithischen Trennsäulen mit kleineren Durchmessern von 4-1 mm, bevorzugt aus einem Monolithen mit 4.6 mm i.D.

Gegenstand der Erfindung ist auch die Herstellung von monolithischen Trennsäulen mit einer über den gesamten Querschnitt der Säule homogenen porösen Kieselgelstruktur. Zu diesem Zweck müssen 0.1 µm bis 30µm, bevorzugt 0.5 bis 5µm, abgeschliffen werden.

### Ausführliche Beschreibung der Erfindung

Wie oben schon gesagt verläuft die Herstellung der erfindungsgemäßen monolithischen Chromatographiesäulen mit verringertem Säulenquerschnitt in zwei Schritten, und zwar indem erst eine monolithische Chromatographiesäule mit üblichen äußeren Abmessungen hergestellt wird, und die hergestellte Säule in einem speziellen Verfahren äußerlich fein abgeschliffen wird.

Die anorganische poröse Säule kann beispielsweise durch Hydrolyse von Metallalkoholaten unter sauren Bedingungen in Gegenwart einer porenbildenden Phase, z. B. einer wässrigen Lösung eines organischen Polymers, hergestellt werden. Auf diese Weise wird ein Gelkörper aufgebaut, aus dem die Poren bildende Substanz entfernt wird unter Bildung des eigentlichen porösen Gelkörpers, der anschließend stark erhitzt wird.

Dementsprechend erfolgt die Herstellung der anorganischen Säulen an sich nach folgendem Schema:
(a) Es wird ein Gel hergestellt, das eine dreidimensional vernetzte Struktur besitzt und aus einer mit Lösungsmittel angereicherten Phase und einer anorganischen Phase besteht.
(b) Das hergestellte Gel wird in ein Lösungsmittelbad gegeben, welches geeignet ist, die organische Komponente zu lösen. Das Lösungsmittel wird unter Vakuum entfernt und das erhaltene Produkt einer Hitzebehandlung unterzogen. Zur Herstellung der anorganischen Phase wird bevorzugt Siliziumdioxid bzw. Kieselgel eingesetzt. Als Lösungsmittel wird bevorzugt verdünnte, wässrige Ammoniaklösung eingesetzt.

Entscheidend für die Herstellung entsprechender Säulen ist, dass im gesamten Volumen der hergestellten Monolithen die Poren gleichförmig aber auch homogen verteilt sind. Dieses wird am besten durch das sogenannte Sol-Gel-Verfahren erzielt. Zur Durchführung dieses Verfahrens werden Metallalkoholate als Ausgangsmaterialien gemeinsam mit geeigneten Substanzen eingesetzt, um getrennte Phasen herzustellen, worin eine lösungsmittelreiche Phase umgewandelt werden kann in Makroporen des getrockneten Gel-Materials. Hierbei wird die dem Metallalkoholat zugefügte chemische Substanz so gewählt, dass sie den Sol-Gel-Übergang der reagierenden Lösung induziert und gleichzeitig im Reaktionsvolumen getrennte Phasen, bzw. phasengetrennte Domänen, entstehen lässt, von denen die eine lösungsmittelreich ist und die andere reich an anorganischer Phase, beispielsweise an Siliziumoxid (Gelskelett, Matrix) ist.
Geeignete Poren bildende chemische Substanzen können wasserlösliche organische Polymere wie Polyethylenoxid sein, oder Mischungen, bestehend aus einem Polyalkohol und Formamid. Es können auch Mischungen, die Formamid und einen Polyalkohol, wie Ethylenglykol, Glycerin oder Sorbitol als Bestandteile der Poren bildenden Phase enthalten, verwendet werden. Von diesen Mischungen führen glycerinhaltige Mischungen zu den besten Ergebnissen.

Wenn Siliziumalkoholate als metallorganische Verbindung verwendet werden, wird die Hydrolyse in saurem Medium durchgeführt. Hierzu werden bevorzugt verdünnte Säuren eingesetzt, und zwar Essigsäure oder Salpetersäure in Konzentrationen 1 mmol/l bis 2 mol/l. Es können zu diesem Zweck aber auch andere verdünnte Säuren verwendet werden.
Geeignete Siliziumalkoholate sind Tetramethoxysilan, Tetraethoxysilan und ihre polymerisierten Derivate.

Nach der Verfestigung der eingesetzten Lösung wird das erhaltene Gel über einen angemessenen Zeitraum gealtert und dann in ein die Matrix auflösendes Reagens getaucht. Ein solches Reagens kann eine wässrige Lösung mit geeigneter Säure- oder Basenkonzentration oder eine fluoridionenhaltige wässrige Lösung sein. Dabei ersetzt die Lösung (externe Lösung), in die das Gel getaucht wird, die lösungsmittelreiche Phase, so dass die externe Lösung mit der inneren Oberfläche der anorganischen Phase, der Matrix, in Berührung kommt. Wenn die externe Lösung die Matrix auflösen kann, durchläuft die Innenwand einen Auflösungs- und Wiederausfällungsprozess, wodurch kleinere Poren verloren gehen und die Zahl der größeren Poren zunimmt. Dieser Schritt ist für die Bildung einer engen Größenverteilung der Mesoporen wesentlich.

Der Effekt des Lösungsmittelaustauschs ist unter sauren oder neutralen Bedingungen sehr gering, wenn die Matrix aus Siliziumoxid besteht. Im basischen Bereich gewinnt er immer mehr an Bedeutung. Je nach späterem Verwendungszweck ist daher die Wahl des externen Lösungsmittels, die Dauer der Einwirkung und die dabei eingestellte Temperatur von Bedeutung.

Wie beschrieben bilden sich also in den hergestellten Gelen mit lösungsmittelreichen Arealen, die nach dem Trocknen zu Makroporen umgewandelt werden, während der Umwandlung viele feine Poren in der Oberfläche der Makroporen, sogenannte Mesoporen, welche einen schnellen, intensiven Kontakt mit durchfließenden Lösungen erlauben. Durch gezielte Wahl des externen Lösungsmittels und gezielte Einstellung der übrigen Parameter lässt sich dieser Vorgang so regeln, dass Säulen mit identischen Charakteristika und hoher Reproduzierbarkeit erhalten werden.

Unter geeigneten Bedingungen kann die Bildung der feinen Poren aber auch vermieden werden, während sich die Struktur der Makroporen nicht verändert.

Während des Lösungsmittelaustauschs empfiehlt es sich, das Lösungsmittel, in welches das Gel transferiert wird, also das externe Lösungsmittel, mehrere Male oder kontinuierlich auszutauschen, um eine gleichmäßige Porenstruktur im Produkt zu erhalten.

Obwohl das organische Polymer zu einem gewissen Grad auf diese Weise aus dem porösen Gel vor dem Trocknen herausgewaschen werden kann, empfiehlt es sich, das Gel nach dem Waschvorgang zu kalzinieren und auf eine geeignet hohe Temperatur zu erhitzen, bei der sich das Polymer thermisch zersetzt, um seine vollständige Entfernung zu erzielen.

Wenn Kieselgel als Matrixmaterial verwendet wird, ist es vorteilhaft, als "äußeres Lösungsmittel" basische Lösungen, wie wässrige Ammoniaklösung oder NaOH-Lösung zu verwenden. Es können jedoch auch andere basische Lösungsmittel verwendet werden. Darüber hinaus sind auch saure oder neutrale Lösungsmittel geeignet, wie z. B. wässrige HF-Lösung, sofern sie in der Lage sind, Kieselgel zu lösen.

Nach Beendigung des Lösungsmittelaustauschs wird das lösungsmittelhaltige Gel im Vakuum getrocknet. Während des Trocknens schrumpft das Gel und man erhält das sogenannte "Xerogel". Da darin noch nicht-flüchtige Verbindungen enthalten sind, ist eine Hitzebehandlung erforderlich, durch die man das eigentliche gewünschte poröse anorganische Material, den sogenannten Monolithen, erhält.

Um die Porengröße und den Volumenanteil der Mesoporen zu kontrollieren, sollte der verfestigte Gelkörper also in einem Gel-lösenden Mittel, wie beispielsweise wässrige Ammoniaklösung, ausgelaugt werden bevor er getrocknet wird.

Je nach gewünschter Größe der Mesoporen kann die Konzentration der hierfür verwendeten Ammoniaklösung im Bereich von 10 mmol/l bis 10 mol/l liegen. Bevorzugt wird mit Lösungen mit einer Konzentration im Bereich von 0.1-1 mol/l Ammoniak gearbeitet.

Die Struktur und der Aufbau so erhaltener Chromatographiesäulen hängen von den gewählten Prozessparametern ab und werden bestimmt durch die eingesetzten Ausgangsmaterialien, Reaktionstemperatur, pH, Art des gegebenenfalls eingesetzten Katalysators, der Menge und des Molekulargewichts des verwendeten organischen Polymers und der verwendeten Lösungsmittel. Es hat sich aber gezeigt, dass unter exakt gleichen Bedingungen reproduzierbare Strukturen erhalten werden.

In den hergestellten Säulen weisen die miteinander verbundenen Makroporen, je nach gewählten Prozessparametem, im Mittel Durchmesser im Bereich von 0.1 bis 50 µm, bevorzugt von 0.2 bis 20 µm auf. Insbesondere werden die Parameter so gewählt dass Säulen mit Makroporendurchmesser im Bereich von 0.2 bis 10 µm erhalten werden.

Bevorzugt wird das sich in der hergestellten Säule ergebende Porenvolumen so eingestellt, dass es im Bereich von 50 bis 80 % bezogen auf das Gesamtvolumen beträgt, so dass die Säule eine ausreichende Stabilität für die nachfolgende Schleifbehandlung aufweist und sich während der späteren Anwendung geeignete Druckverhältnisse aufbauen können.

Wie oben schon erwähnt, weisen die Makroporen in den Oberflächen wiederum Mesoporen auf. Letztere besitzen mittlere Durchmesser im Bereich von 2 bis 100 nm. Besonders gute Eigenschaften besitzen Säulen, deren Mesoporen mittlere Durchmesser von im Bereich von 2 bis 50 nm, insbesondere von 5 bis 30 nm, liegen.

Während der Herstellung wird der sich einstellende mittlere Durchmesser der Mesoporen durch die Temperatur während der Behandlung mit dem "externen" Lösungsmittel kontrolliert. Üblicherweise erfolgt dieser Schritt bei einer Temperatur im Bereich von 10 bis 80 °C, vorzugsweise wird bei einer Temperatur im Bereich von 25 bis 60 °C gearbeitet.

Das Verhältnis des Mesoporenvolumens zum Gesamtvolumen der Poren sollte möglichst höher als 10 % sein.

Wie für herkömmliche Chromatographiesäulen bekannt, können auch die erfindungsgemäßen Säulen durch funktionelle Gruppen derivatisiert werden, indem diese an der Oberfläche der Mesoporen gebunden, oder indem Enzyme, wie Glukoseisomerase, oder Metallkatalysatoren, wie Platin oder Palladium, in den Poren geträgert werden. Zu diesem Zweck ist es von großer Bedeutung, dass während der Herstellung der Säulen die durchschnittliche Größe sowohl der Makroporen als auch der Mesoporen durch exakte Einstellung der Verfahrensparameter genau gesteuert wird.

Wenn nun das Volumen der Mesoporen geringer als 10 % ist, selbst wenn der Volumenanteil der Makroporen 90 % beträgt, ist die Möglichkeit zur Reaktion mit funktionellen Liganden begrenzt.

Wie oben bereits angesprochen, haben sich in den letzten Jahren für bestimmte Trennungen organische Chromatographiesäulen etabliert, und zeigen hierbei Trennleistungen, die denen der Kieselgelformkörper äquivalent sind. Diese organischen Säulen lassen sich beispielsweise durch Massepolymerisation von Monomeren in einem Kieselgelformkörper, einem sogenannten Matrizenformkörper, und anschließendem Herauslösen des Kieselgels organische Polymerformkörper für die Chromatographie herstellen.

Als Matrizenformkörper für das erfindungsgemäße Verfahren werden typischerweise entsprechend dimensionierte poröse Formkörper verwendet, deren Porensystem insbesondere aus Makroporen gebildet wird. Bevorzugterweise besitzen die Formkörper zusätzlich auch Mesoporen in den Wänden der Makroporen. Die untereinander verbundenen Makroporen besitzen typischerweise einen Durchmesser, der einen Medianwert größer als 0,1 µm aufweist. Der Durchmesser der Mesoporen weist im allgemeinen einen Medianwert zwischen 2 und 100 nm auf. Durch die Art der Porosität bzw. der spezifischen Oberfläche des Matrizenformkörpers kann die Porosität und spezifische Oberfläche des einpolymerisierten Formkörpers beeinflusst werden. Die entstehenden erfindungsgemäßen Formkörper können demnach Makroporen und bevorzugt auch Mesoporen der gleichen Größenordungen aufweisen, wie sie für die Matrizenformkörper aufgeführt sind.

Statt eines porösen Formkörpers kann als Matrizenformkörper auch eine Säule oder eine entsprechende Halterung verwendet werden, die mit porösen Partikeln gefüllt ist. In diesem Fall bilden die Partikelzwischenräume üblicherweise Makroporen.

Als Matrizenformkörper werden typischerweise entsprechend dimensionierte poröse Formkörper verwendet, deren Porensystem insbesondere aus Makroporen gebildet wird. Vorzugweise besitzen die Formkörper zusätzlich Mesoporen in den Wänden der Makroporen. Die untereinander verbundenen Makroporen besitzen typischerweise einen Durchmesser, der einen Medianwert größer als 0,1 µm aufweist. Der Durchmesser der Mesoporen weist im allgemeinen einen Medianwert zwischen 2 und 100 nm auf. Durch die Art der Porosität bzw. der spezifischen Oberfläche des Matrizenformkörpers ist die Porosität und spezifische Oberfläche des einpolymerisierten Formkörpers steuerbar, so dass in folge die entstehenden organischen Formkörper Makroporen und Mesoporen der gleichen Größenordungen aufweisen, wie sie für die Matrizenformkörper aufgeführt sind.

Statt eines porösen Formkörpers kann als Matrizenformkörper auch eine Säule oder eine entsprechende Halterung verwendet werden, die mit porösen Partikeln gefüllt ist. In diesem Fall bilden die Partikelzwischenräume üblicherweise Makroporen.

Um nach erfolgter Polymerisation den Matrizenformkörper entfernen zu können, muss dieser aufgelöst und ausgewaschen werden, ohne das entstandene organische Polymer zu zerstören. Geeignete Matrizenformkörper bestehen aus anorganischen Materialien, wie anorganischen Oxiden, insbesondere Kieselgel, Dies können monolithische Formkörper sein, wie in WO 94/19 687 oder WO 95/03 256 beschrieben. Sie können kalziniert oder unkalziniert eingesetzt werden, je nach der gewünschten Porosität des herzustellenden organischen Polymers.

Matrizenformkörper aus Kieselgel können mit wässrigen Basen oder mit wässriger Flusssäure ausgewaschen werden. Falls die einpolymerisierten organischen Formkörper unter diesen Bedingungen ebenfalls labil sind, muss ein anderer Matrizenformkörper gewählt werden. Dies kann beispielsweise ein poröser Matrizenformkörper aus einem organischen Polymer sein, das unter Bedingungen ausgewaschen wird, die den einpolymerisierten Formkörper nicht zerstören. So können beispielsweise Polylactide oder Melamin-Phenol-Formaldehydharze eingesetzt werden.

Es lassen sich so verschiedenste organische polymere Formkörper herstellen, die beispielsweise durch radikalische, ionische oder thermische Polymerisation erzeugt werden. Dementsprechend können die erhaltenen Formkörper aus Poly(meth)-acrylsäurederivate, Polystyrolderivaten, Polyestern, Polyamiden oder Polyethylenen bestehen. Die zur Herstellung einzusetzenden Monomere sind dem Fachmann auf dem Gebiet der organischen Polymere bekannt. Beispiele hierfür sind dies monoethylenisch oder polyethylenisch ungesättigte Monomere, wie Vinyl-Monomere, vinylaromatische und vinylaliphatische Monomeren, wie z.B. Styrol und substituierte Styrole, Vinylacetate oder Vinylpropionate, acrylische Monomere, wie Methacrylate und andere Alkylacrylate, Ethoxymethylacrylat und höhere Analoga und die entsprechenden Methacylsäureester oder deren Amide, wie Acrylamid oder Acrylnitril, Weitere monoethylenisch und polyethylenisch ungesättigten Monomere finden sich beispielsweise in EP 0 366 252 oder US 5,858,296.

Der Fachmann ist in der Lage, verschiedene Monomeren gezielt zu kombinieren, gegebenenfalls einen geeigneten Radikalstarter oder Initiator hinzuzufügen und so eine Monomerlösung herzustellen, mit der der Matrizenformkörper aufgefüllt werden kann. Die Polymerisationsdauer und -temperatur ist nach üblichen Regeln auf die jeweilige Monomerlösung abzustimmen.

Nach Beendigung der Polymerisation wird der entstandene solide Formkörper, der beispielsweise aus dem anorganischen Matrizenpolymer und dem abgeformten organischen Polymer besteht, entnommen und das Material des Matrizenformkörpers herausgelöst. Dazu wird der Formkörper in einer Waschlösung, optional unter Erhitzen, gegeben und falls nötig geschwenkt. Eine Behandlung mit wässriger Flußsäure zur Entfernung von Kieselgel dauert typischerweise 48 h.

Nach weiteren Waschschritten zur Entfernung der aggressiven Waschlösung und letzter Partikel erhält man den porösen organischen polymeren Formkörper als Abdruck zum eingesetzten Matrizenformkörper.

Falls die entstandenen Formkörper bereits die geeigneten Funktionalitäten aufweisen, können sie direkt für chromatographische Trennungen eingesetzt werden. Ein Polymer aus Polystyrol oder -derivaten kann z. B. mit entsprechenden Anschlussstücken und einer Ummantelung versehen direkt für Reversed Phase Trennungen verwendet werden. Dazu werden die Formkörper und in eine chromatographische Trennsäule integriert. Geeignete Halterungen und Ummantelungen sind für anorganische monolithische Sorbentien bekannt (z.B. WO 98/59238 und die unveröffentlichte DE 99 32 318). Geeignete Ummantelungen mit Kunststoffen können z.B. aus PEEK oder faserverstärktem PEEKbestehen.

In Abhängigkeit von den gewünschten Trenneigenschaften können weitere Modifikationen notwendig sein. Soll die Säule für die Affinitäts- oder Ionentausch-chromatographie eingesetzt werden, muss die Porenoberfläche mit entsprechenden Separationseffektoren belegt sein, sofern geeignete Substanzen nicht bereits der Monomerlösung zugesetzt wurden und so direkt in das Polymer eingeführt worden sind. Bevorzugt erfolgt jedoch die Funktionalisierung erst anschließend und die funktionellen Gruppen lassen sich mit dann mit Separationseffektoren umgesetzen. Auch können weitere Modifikationen durch Block- oder Pfropfpolymerisationen auf den polymeren Formkörpern eingeführt werden. Separationseffektoren und Monomere, die neben einer polymerisierbaren Doppelbindung noch weitere Funktionalitäten, wie z.B. Oxiranringe, enthalten, sind dem Fachmann bekannt. Beispiele finden sich in WO 96/2216, WO 96/22316 oder WO 95/10354.

Genauso können geeignete Funktionalitäten der erfindungsgemäßen Formkörper zur Anbindung bzw. Immobilisierung von Biomolekülen, wie beispielsweise Enzymen verwendet werden,

Weiterhin können Formkörper mit besonderen Trenneigenschaften hergestellt werden. Wie beim "Molecular Imprinting" können Templat-Moleküle an die Oberfläche des, in diesem Falle porösen oder unporösen, Matrizenformkörpers gebunden werden. Anschließend werden die Zwischenräume oder Poren mit Monomerlösung ausgefüllt und auspolymerisiert. Während der Polymerisation bilden sich Kavitäten aus, die die Templat-Moleküle umschließen. Dann wird der Matrizenformkörper und die daran gebundenen Templatmoleküle ausgewaschen, Dieses hat den Vorteil, dass durch die Bindung an den Matrizenformkörper die Templatmoleküle eine definiert ausgerichtete Position einnehmen. Es entstehen so definiertere Kavitäten, die bei der chromatographischen Trennung eindeutigere und stärkere Wechselwirkungen eingehen können. Nach der Polymerisation können alle Templatmoleküle ausgewaschen werden. Erst im zweiten Schritt wird die Monomerlösung zugegeben und polymerisiert.

Da die polymeren organischen Chromatographiesäulen Formkörper sind, die unter Verwendung von geeigneten anorganischen oder organischen Formkörpern als Matrix hergestellt werden, weisen sie ebenso wie die oben beschriebenen anorganischen, monolithischen Trennsäulen inhomogene Randbereiche auf, welche die Trennleistung beeinträchtigen. Wie auch bei den anorganischen Trennsäulen wird der Einfluss der Randbereiche um so größer je geringer der Durchmesser der hergestellten Säule ist.

Überraschend wurde nun gefunden, dass es möglich ist, sowohl aus nach dem üblichen Sol-Gel-Verfahren hergestellten anorganischen monolithischen Trennsäulen, mit einem Durchmesser von 4,6 mm und mehr als auch aus den beschriebenen entsprechenden organischen Trennsäulen, aber auch aus monolithischen Carbonsäulen Säulen mit verringerten Durchmessern, beispielsweise von 3 oder 2 mm oder weniger, herzustellen, indem das äußere Material in einem spitzenlosen Abschleifprozess abgeschliffen wird. Problematisch ist bei dieser Vor gehensweise, dass die eingesetzten monolithischen Trennsäulen als Ausgangsmaterialien sehr zerbrechlich sind, weil sie eine Gesamtporosität von etwa 80 % und mehr aufweisen und das Feststoffskelett, aus dem der Monolith aufgebaut ist, Schichtdicken von lediglich 1 - 3 µm aufweist. Trotzdem gelingt es nach dem erfindungsgemäßen neuen Verfahren, monolithischen Trennsäulen mit entsprechend verringertem Durchmesser herzustellen,

Zu diesem Zweck wird der Durchmesser der Monolithe stufenweise mit Hilfe von rotierenden Schleifscheiben um jeweils einige zehntel Millimeter verringert. Nach gängigen Erfahrungen würde der Fachmann nun davon ausgehen, dass während dieses Prozesses freigesetztes, abgetragenes Material während des Schleifprozesses auf die Randbereiche der so behandelten Trennsäulen einwirkt und die äußere Porenstruktur nachteilig beeinflusst. Es wurde jetzt jedoch gefunden, dass erfindungsgemäß hergestellte monolithische Trennsäulen deutlich bessere chromatographische Trennergebnisse liefern im Vergleich zu Trennsäulen, die nach herkömmlichen Methoden direkt im Sol-Gel-Verfahren mit dem gewünschten geringen Durchmesser von weniger als 4,6 mm hergestellt worden sind.

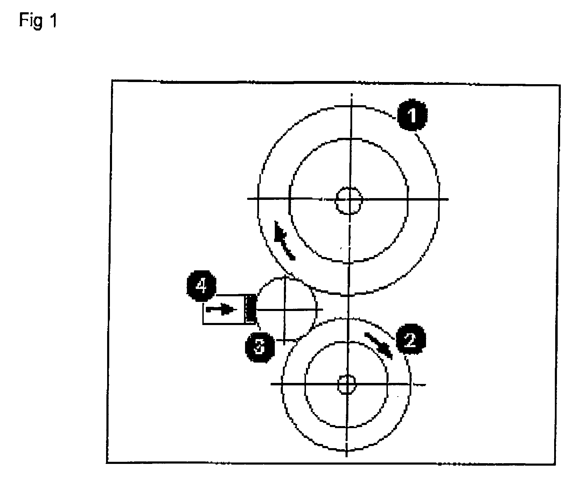

Der eigentliche Schleifprozess wird auf einer Schleifmaschine durchgeführt, die eine Schleifscheibe (1) und eine Regelscheibe (2), durch die das Werkstück (3) gedreht wird, sowie einen Einstechschlitten bzw. Zuführschlitten (4) aufweist, wobei letzterer während des Schleifprozesses in den Spalt geführt werden kann, der zwischen der sich drehenden Schleifscheibe (1) und der sich gegenläufig drehenden Regelscheibe (2) entsteht. Das Werkstück (3) wird während des Schleifens von dem Zuführschlitten (4) gehalten. Die Weite des Spalts zwischen Schleifscheibe (1) und Regelscheibe (2) ist sehr fein regelbar. Hierdurch ist es möglich, Werkstücke, die mit dem Zuführschlitten (4) in den Spalt positioniert werden, auf nm genau zu schleifen. Während des Schleifens dreht sich die Schleifscheibe (1) schneller als die Regelscheibe. Da das Werkstück (3) auf dem Zuführschlitten (4) von der Regelscheibe (2) gedreht wird, dreht es sich wiederum langsamer als die Schleifscheibe (1). Hierdurch erfolgt ein Materialabtrag. Spitzenloses Abschleifen bedeutet also, dass es an den Enden des Werkstücks keine Halterung gibt. Schematisch ist das Grundprinzip des "spitzenlosen Schleifens" in Fig. 1 dargestellt. Um zu vermeiden, dass feinste, abgeschliffene Materialteilchen erneut mit dem zu bearbeitenden Monolithen als Werkstück wieder in Kontakt kommt ist oberhalb dem Spalts zwischen Schleifscheibe (1) und Regelscheibe (2) eine Absaugvorrichtung angebracht. Während des Schleifens wird durch die Absaugvorrichtung ein stetiger Luftstrom erzeugt, wodurch abgetragene, bewegliche feine Teilchen umgehend entfernt werden. Darüber hinaus ist über der Oberfläche der Schleifscheibe in gegenüber liegender Position zu dem zugeführten Werkstück eine weitere Saugvorrichtung angebracht, die kontinuierlich von der Oberfläche der Schleifscheibe (1) anhaftende Teilchen absaugt. Auf diese Weise kann erfolgreich vermieden werden, dass von den zu bearbeitenden Monolithen abgetragenes, feinteiliges Material wieder an die Oberfläche des Werkstücks gelangt und mit den freigelegten Poren nachteilig in Wechselwirkung tritt. Durch geeignete Regulierung des Verhältnisses der Umdrehungszahlen der Schleifscheibe (1) und der Regelscheibe(2) zueinander, ist es in einfacher Weise möglich, geringste Schichten von der äußeren Oberfläche des Monolithen abzutragen, ohne die Porenstruktur zu beschädigen und ohne Gefahr zu laufen, dass aus der Oberfläche unregelmäßig kleine Areale beschädigt werden.

Während des Schleifprozesses wird der Monolith als Werkstück kontinuierlich mit dem Zuführschlitten (4) durch den Spalt vorgeschoben, wobei der Monolith frei drehbar auf dem Zuführschlitten liegt. Durch eine exakt einstellbare Halterung des Zuführschlittens wird dabei gewährleistet, dass der Monolith über die gesamte Länge hinweg gleichmäßig dem Schleifort zugestellt und abgeschliffen wird. Gleichzeitig wird ein Brechen des Monolithen vermieden, weil er über die gesamte Länge im Zuführschlitten aufliegt.

Um gute Schleifergebnisse zu erhalten, empfiehlt es sich einen nach dem Sol-Gel-Verfahren hergestellten Monolithen in mehreren Schritten auf den gewünschten geringen Durchmesser abzuschleifen und dabei jeweils Schichten von höchsten wenigen µm Dicke abzutragen. Erfahrungsgemäß werden um so bessere Schleifergebnisse erzielt, je dünner die abgeschliffenen Schichten sind.

Weitere Versuche zeigten überraschender Weise, dass nicht nur durch den beschriebenen spitzenlosen Abschleifprozess störende äußere Randbereiche abgetragen werden können und so der Durchmesser der monolithischen Trennsäulen verringert werden kann, sondern dass auch andere Schleifmethoden zu einem entsprechenden Ergebnis führen können, wenn unter geeigneten Zuführungsbedingungen in mehreren Schritten äußerlich sehr dünne Schichten von den hergestellten monolithischen Trennsäulen äußerlich abgetragen werden. Wesentlich ist dabei jeweils, dass mit äußerst geringem Druck gearbeitet werden muss und der Monolith über die gesamte Länge gleichmäßig auf einer Unterlage aufliegt, so dass keine Hebelkräfte wirken können, die zu einem Brechen des Monolithen führen würden. Außerdem ist es vorteilhaft, gleich welches Schleifverfahren angewendet wird, während des Abschleifens entstehende Partikel durch Absaugen möglichst sofort nach der Entstehung von der Oberfläche des behandelten Monolithen zu entfernen und dadurch ein Festsetzen in den äußeren Poren zu verhindern.

Erfindungsgemäß ist daher die Verringerung des Durchmessers einer entsprechenden anorganischen oder organischen monolithischen Säule in einer entsprechend ausgerüsteten Rundschleifmaschine, die eine äußerst feine Einstellung erlaubt, durch Rundschleifen zwischen Spitzen durchführbar.

Unter Berücksichtigung des empfindlichen Aufbaus der monolithischen Säulen besteht eine andere Möglichkeit darin, durch Drehen zwischen Spitzen unter Einsatz einer Drehmaschine dünne äußere Schichten abzutragen und auf diese Weise erfindungsgemäß Trennsäulen mit über den gesamten Querschnitt identischen Eigenschaften herzustellen.

Beim Drehen handelt es sich um ein spanendes Verfahren mit geometrisch bestimmter Schneide. Im Allgemeinen wird die Drehbewegung durch das Werkstück, in unserem Fall durch die Drehbewegung des Monolithen, durchgeführt. Der Monolith ist dabei fest eingespannt und wird an der zu bearbeitenden Fläche entlang geführt und wird dabei rundgedreht. Für diesen Zweck geeignete Drehmaschinen können im Handel erworben werden und lassen sich vom Fachmann mit geeigneten Halte- und Absaugvorrichtungen ausstatten.

Darüber hinaus wurde gefunden, dass an sich alle Methoden zur Verringerung des Durchmessers durch Abtragen dünnster äußerer Schichten des Monolithen geeignet sind, um aus einer herkömmlich hergestellten, stabil vernetzten, organischen oder anorganischem monolithischen Trennsäule oder auch aus einementsprechenden Carbonmonolithen ne erfindungsgemäße monolithische Trennsäulen mit verbesserten Trenneigenschaften herzustellen.

In diesem Sinn sind auch Methoden zum Kernlochbohren einsetzbar, wobei das Werkstück, hier ein Monolith, ringförmig zerspant wird und neben dem Bohrloch ein zylindrischer Kern, hier die organische oder anorganische monolithische Trennsäule mit verringertem Durchmesser, zurückbleibt. Dieses hat den Vorteil, dass als Ausgangswerkstück ein entsprechender Monolith mit Abmessungen verwendet werden kann, welche die Handhabung erleichtern. Aber auch in diesem Fall ist es von Vorteil, wenn sich der ursprüngliche Durchmesser nur um wenige mm von dem gewünschten unterscheidet.

Weiterhin ist es möglich, dünne äußere Schichten manuell oder durch entsprechende Geräte unterstützt mit Schleifpapier abzuschleifen. Auch in diesem Fall ist es von Vorteil das Abschleifen unter Absaugung des abgetragenen Materials durchzuführen. Zu diesem Zweck werden nacheinander dünne Schichten mit Schleifmedien unterschiedlicher Körnung abgetragen, beginnend mit der gröbsten Körnung. Es versteht sich von selbst, dass wie bei allen vorher beschriebenen Methoden äußerst sensibel und feinfühlig gearbeitet werden muss und dabei das zu bearbeitende Werkstück sicher auf einer Unterlage gebettet sein muss.

Mechanisch kann dieser Vorgang auch mit einem Bandschleifer durchgeführt werden, wenn er eine geeignete Haltevorrichtung für die zu bearbeitenden Monolithen aufweist und mit einer Absaugung versehen ist.

Wenn der Abschleifvorgang abgeschlossen ist, empfiehlt es sich unabhängig von der Schleifmethode, die erhaltene monolithische Säule noch einmal in einem geeigneten Lösungsmittel, wie z. B. Wasser, Alkohol, Äther oder dergleichen zu waschen und von eventuell noch anhaftenden Partikeln zu befreien.

Im Anschluss an das Abschleifen kann durch Ummanteln aus dem erhaltenen Rohling eine gebrauchsfertige Chromatographiesäule mit sehr geringen Durchmesser hergestellt werden. Das Ummanteln kann nach bekannten Methoden erfolgen. Besonders vorteilhaft sind besonders torvolumenarme Ummantelungen, wie sie in WO 01/77660 A1 beschrieben sind. Nach diesem Verfahren werden in einem ersten Schritt aus geeigneten Kunststoffen, denen gegebenenfalls Fasermaterialein zugesetzt werden, durch Extrusion oder Spritzguss dünne Rohre mit einem entsprechend geringen Innendurchmesser hergestellt. In diese dünnen Rohre werden anschließend die abgeschliffenen monolithischen Chromatographiesäulen eingeführt. Durch Erwärmen und Aufschrumpfung wird das jeweilige Rohr dann in möglichst engen Kontakt mit dem Formkörper gebracht, so dass eine totvolumenarme Ummantelung entsteht. Nur Materialien mit einer geeigneten Viskosität lassen sich ausreichend dicht an den Formkörper anfügen. Vorteilhaft ist in diesem Schritt die Verwendung von homogenen Rohren, die über die gesamte Länge eine gleichmäßige Wandstärke aufweisen. In der Patentanmeldung in WO 01/77660 A1 sind sowohl für diesen Zweck geeignete Kunststoffzusammensetzungen als auch Verfahren zur Herstellung der Ummantelungen beschrieben. Entsprechend kann auch hier verfahren werden. Es sind aber auch andere Methoden der Ummantelung als hier beschrieben einsetzbar. Wesentlich für ein gutes Trennverhalten ist unabhängig von der Ummantelungsmethode, dass die Bildung von Totvolumen unterdrückt wird, das das Trennverhalten der Säulen nachteilig beeinflussen würde.

Nachdem die ummantelten Chromatographiesäulen mit verringertem Durchmesser mit geeigneten Anschlussstücken, Filtern, Dichtungen etc. versehen worden sind, können sie in der gewünschter Anwendung eingesetzt werden.

Untersuchungen der erfindungsgemäß hergestellten monolithischen Trennsäulen haben gezeigt, dass sie über den gesamten Querschnitt und die gesamte Länge hinweg homogene physikalische Eigenschaften aufweisen. Vorteilhafter Weise wurde gefunden, dass auch nach erfolgter Ummantelung die äußeren Poren ihre Struktur beibehalten haben.

Sie werden weder durch den Schleifvorgung noch durch den Ummantelungsprozess nachteilig beeinflusst.

Die erfindungsgemäß ummantelten monolithischen Chromatographiesäulen zeigen hervorragende Trenneigenschaften. Auch nach Lagerung in Lösungsmitteln und häufiger Benutzung zeigt sich keine oder nur geringfügige Verschlechterung der Trennleistungen. Somit gewährleistet die Herstellung der Chromatographiesäulen mit verringertem Innendurchmesser und die nachfolgende Ummantelung die Herstellung von Chromatographiesäulen zur Auftrennung von sehr geringen Flüssigkeitsmengen, die sowohl mechanisch und chemisch stabil sind.

Zur Ausführung der vorliegenden Erfindung können den im folgenden gegebenen Beispielen nähere Einzelheiten entnommen werden.

Auch ohne weitere Ausführungen wird davon ausgegangen, dass ein Fachmann anhand der obigen Beschreibung und der gegebenen Beispiele die vorliegende Erfindung im weitesten Umfang ausführen und nutzen kann.

Zum besseren Verständnis und zur Verdeutlichung der Erfindung werden ergänzend im folgenden Beispiele gegeben, die im Rahmen des Schutzbereiches der vorliegenden Erfindung liegen. Diese bevorzugten speziellen Ausführungsformen sind nur beispielhaft und sind nicht dazu geeignet, die vorliegende Erfindung hierauf zu beschränken.

Die vollständige Offenbarung aller in dieser Anmeldung aufgeführten Anmeldungen und Veröffentlichungen werden darüber hinaus hiermit durch Bezugnahme in diese Anmeldung eingeführt.

### Beispiele

### Beispiel 1

### Herstellung einer monolithischen Trennsäule

In einem ersten Schritt werden 0.70 g Polyethylenoxid (Artikelnr. 85645-2, der Firma Aldrich, Molekulargewicht: 10000) in einer 0. 001 mol/l wässrigen Essigsäurelösung gelöst. Mit dieser Lösung werden unter Rühren 5 ml Tetramethoxysilan vermischt, um eine Hydrolysereaktion hervorzurufen. Nach einigen Minuten Rühren, wird die entstandene klare Reaktionslösung in ein geeignetes, verschließbares Gefäß umgefüllt und konstant bei einer Temperatur von 40 °C gehalten. Die Reaktionslösung verfestigt sich nach etwa 40 Minuten.

Das verfestigte Produkt lässt man bei gleichbleibender Temperatur für einige Stunden stehen. Anschließend lässt man es drei Tage lang bei 40 °C in einer wässrigen 0,1-molaren Ammoniaklösung eingetaucht stehen, wobei die Lösung kontinuierlich nach und nach ausgetauscht wird. Der pH-Wert der Ammoniaklösung beträgt dabei etwa 10. lm Anschluss an diese Behandlung wird das erhaltene Gel bei 60 °C getrocknet und dann auf eine Temperatur von 600 °C erhitzt. Das Erhitzen erfolgt dabei so langsam, dass sich die Temperatur in einer Stunde höchstens um 100°C pro Stunde erhöht. Auf diese Weise bildet sich aus dem porösen Material amorphes Kieselgel, bzw ein Silica Monolith.

Durch elektronenmikroskopische Untersuchungen kann gezeigt werden, dass ein Produkt mit gleichmäßigen, untereinander verbundenen Makroporen einer Größe von etwa 1,6 µm (160nm) hergestellt worden ist. Außerdem kann durch Stickstoffadsorption gezeigt werden, dass in den Makroporen kleinere Poren, sogenannte Mesoporen, mit einem Durchmesser von etwa 10 nm vorhanden sind.

Durch Variation der Temperatur während der Austauschs der Essigsäurelösung gegen Ammoniaklösung kann Einfluss auf die Größe der Mesoporen genommen werden, und zwar indem die Temperatur auf einen Wert zwischen 25 und 60 °C eingestellt wird, während die übrigen Herstellungsbedingungen unverändert bleiben. Während die Makroporen unverändert bleiben, lässt sich so die Größe der Mesoporen im Bereich von 6 bis 13 nm variieren. Je höher die Temperatur während des Lösungsmittelaustauschs gewählt wird, desto größere Mesoporen bilden sich.

### Beispiel 2

3 Silica Monolithen mit einem Durchmesser von 7.2 mm und einer Länge von ca 14.5 cm, hergestellt wie in Beispiel 1 beschrieben, werden mittels spitzenlosen Rundschleifens in mehreren Schleifschritten auf den Durchmesser von 4.6 mm reduziert.
Die so erhaltenen monolithischen Säulen werden in ein PEEKrohr gegeben über das noch ein Teflonschrumpfschlauch gezogen wird. Anschliessend wird das erhaltene Produkt in einem Ofen auf ca. 400°C erhitzt. Nach Herausnahme aus dem Ofen erfolgt durch die Abkühlung ein Schrumpfen des Teflonschlauches. Hierbei wird das geschmozene PEEK auf den Kieselgelmonolithen totvolumenfrei gedrückt. und, mit einem lösungsmittel- und mechanischstabilen Polymer ummantelt und chromatographisch im Adsorptionssystem mit Heptan/ Dioxan (95/5;v/v) und 2-Nitroanisol untersucht.
Es wurden folgende Trennleistungen und Peaksymmetrien erhalten

| | Trennleistung N/m | Peaksymmetrie Tusp |
|---|---|---|
| Säule 1 | 120520 | 1.03 |
| Säule 2 | 127070 | 0.97 |
| Säule 3 | 122960 | 1.06 |

### Beispiel 2:

3 Silica Monolithen mit einem Durchmesser von 7.2mm und einer Länge von 12.5cm, hergestellt wie in Beispiel 1 beschrieben, werden mittels einer spitzenlosen Rundschleifmaschine auf den Durchmesser von 4.6mm reduziert. Anschliessend werden sie in einer 20%igen Lösung von N,N-diethylamino dimethyl octadecylsilan in Toluol für 17 Std. unter Rückfluss gekocht und im Soxhlet mit n-Heptan gewaschen. Nach dem Trocknen werden die Monolithen erneut in 100% Hexamethyldisilazan (HMDS) unter Rückfluss für 17 Std. gekocht, erneut ausgewaschen. Die derivatisierten RP-18 Monolithen (4.6mm im Durchmesser) werden mit bestehenden Verfahren, wie in EP 1209179 A1 offenbart, mit einem lösungsmittel- und mechanischstabilen Polymer ummantelt (wie in Beispiel 1 beschrieben) und chromatographisch im Reversed Phase Mode mit Acetonitril/Wasser (60/40;v/v) und Anthracen untersucht. Es wurden folgende Trennleistungen und Peaksymmetrien erhalten

| | Trennleistung N/m | Peaksymmetrie Tusp |
|---|---|---|
| Säule 1 | 81510 | 1.52 |
| Säule 2 | 104930 | 1.57 |
| Säule 3 | 86610 | 1.39 |

### Beispiel 3:

3 Silica Monolithen mit einem Durchmesser von 4.6mm und einer Länge von 12.5cm, hergestellt wie in Beispiel 1 beschrieben, werden mittels einer spitzenlosen Rundschleifmaschine auf den Durchmesser von 3mm reduziert. Die so erhaltenen monolithischen Säulen wurden mit bestehenden Verfahren, wie in EP 1269179 A1 offenbart, mit einem lösungsmittel- und mechanischstabilen Polymer ummantelt und chromatographisch im Adsorptionssystem mit Heptan/ Dioxan (95/5;v/v) und 2-Nitroanisol untersucht. Es wurden folgende Trennleistungen und Peaksymmetrien erhalten

| | Trennleistung N/m | Peaksymmetrie Tusp |
|---|---|---|
| Säule 1 | 102910 | 1.05 |
| Säule 2 | 106290 | 0.99 |
| Säule 3 | 111500 | 1.06 |

### Beispiel 4:

3 Silica Monolithen mit einem Durchmesser von 4.6mm und einer Länge von 12.5cm, hergestellt wie in Beispiel 1 beschrieben, werden mittels einer spitzenlosen Rundschleifmaschine auf den Durchmesser von 2mm reduziert. Die so erhaltenen monolithischen Säulen wurden mit bestehenden Verfahren, wie in EP 1289179 A1 offenbart, mit einem lösungsmittel- und mechanischstabilen Polymer ummantelt und chromatographisch im Adsorptionssystem mit Heptan/ Dioxan (95/5;v/v) und 2-Nitroanisol untersucht. Es wurden folgende Trennleistungen und Peaksymmetrien erhalten

| | Trennleistung N/m | Peaksymmetrie Tusp |
|---|---|---|
| Säule 1 | 76170 | 1.08 |
| Säule 2 | 66727 | 1.04 |
| Säule 3 | 67582 | 1.01 |

## Patentansprüche

1. Verfahren zur Herstellung von organischen oder anorganischen monolithischen Trennsäulen oder von monolithischen Carbonsäulen mit verringerten Durchmessern von weniger als 3 mm, **dadurch gekennzeichnet, dass** in bekannter Weise hergestellte monolithische Trennsäulen durch stufenweises Abschleifen von sehr dünnen äußeren Schichten auf einen gewünschten Durchmesser von weniger als 4,5 mm reduziert wird.

2. Verfahren gemäß Anspruch 1, **dadurch gekennzeichnet, dass** der Durchmesser in einem spitzenfreien Abschleifprozess auf den gewünschten Durchmesser reduziert wird.

3. Verfahren gemäß Anspruch 1, **dadurch gekennzeichnet, dass** der Durchmesser der monolithischen Trennsäulen stufenweise mit Hilfe von rotierenden Schleifscheiben um jeweils einige zehntel Millimeter verringert wird.

4. Verfahren gemäß Anspruch 1, **dadurch gekennzeichnet, dass** der Durchmesser der monolithischen Trennsäulen stufenweise durch Rundschleifen zwischen Spitzen reduziert wird.

5. Verfahren gemäß Anspruch 1, **dadurch gekennzeichnet, dass** der Durchmesser der monolithischen Trennsäulen stufenweise auf einer Drehmaschine durch Drehen zwischen Spitzen reduziert wird.

6. Verfahren gemäß der Ansprüche 1 - 6, **dadurch gekennzeichnet, dass** die bearbeitete monolithische Trennsäule oder monolithische Carbonsäule nach erfolgtem Abschleifen ummantelt und mit Anschlussstücken, Filtern und Dichtungenversehen wird.
